# EUROPÄISCHE PATENTANMELDUNG

(11) **EP 1 524 148 A2**
(43) Veröffentlichungstag der Anmeldung: **20.04.2005**
(21) Anmeldenummer: 04023287.8
(22) Anmeldetag: 30.09.2004
(51) Int. Cl.: B60P 1/64

(54) **Verkehrsmittel mit Wechselbrücke**

(30) Priorität: 14.10.2003 DE 10347564
(71) Anmelder: DaimlerChrysler AG, 70567 Stuttgart (DE)
(72) Erfinder: Gehring, Ottmar Dr, 71394 Kernen (DE); Heilmann, Harro Dr., 73760 Ostfildern (DE); Schwarzhaupt, Andreas Dr, 76829 Landau (DE); Spiegelberg, Gernot Dr, 71296 Heimsheim (DE); Sulzmann, Armin Dr, 68723 Oftersheim (DE)

(57) **Zusammenfassung**

Die Erfindung betrifft ein Verkehrsmittel oder zugehörender Anhänger (2) mit Wechselbrücke (3, 4) mit einem Tragrahmen und daran befestigten Stützbeinen (5), die in eine Ruheposition vom Untergrund abhebbar und in eine Stützposition bewegbar sind, so dass die Wechselbrücke (3, 4) ohne Verkehrsmittel (1) beziehungsweise Anhänger(2) auf dem Untergrund abstellbar ist, wobei mindestens einem Stützbein (5) ein Mittel (6, 16) zugeordnet ist, um das Stützbein (5) automatisiert von der Ruheposition in die Stützposition und/oder umgekehrt zu verfahren. Am Verkehrsmittel (1) beziehungsweise Anhänger (2) ist ein Steuergerät (8, 10, 11) angeordnet, welches ein Steuersignal an ein an dem Verkehrsmittel (1) beziehungsweise Anhänger (2) befestigtes Betätigungselement (17, 18, 19, 20) ausgibt, so dass dieses mit dem Stützbein (5) an der Wechselbrücke (3, 4) zusammenwirkt, um dieses in die Stützposition oder Ruheposition zu verlagern, wobei das Steuergerät (8, 10, 11) mit jeweils einem elektrisch ansteuerbaren Aktor (17, 19) verbunden ist. Der Aktor (17, 19) ist ein elektrisch betätigbares Ventil (17) eines Schub- oder Zugzylinders (16) oder ein Elektromotor (19) und das Steuergerät (8, 10, 11) ist mit mindestens einem weiteren Verriegelungsaktor verbunden, um die Wechselbrücke (3, 4) während der Fahrt am Verkehrsmittel festzulegen.

## Beschreibung

Die Erfindung betrifft ein Verkehrsmittel oder einen zugehörenden Anhänger mit einer Ansteuerung zur Betätigung einer aufladbaren Wechselbrücke mit einem Tragrahmen und daran befestigten Stützbeinen, die in eine Ruheposition vom Untergrund abhebbar und in eine Stützposition bewegbar sind, so dass die Wechselbrücke ohne Verkehrsmittel bzw. Anhänger auf dem Untergrund abstellbar ist, wobei mindestens einem Stützbein ein Mittel zugeordnet ist, um das Stützbein automatisiert von der Ruheposition in die Stützposition und/oder umgekehrt zu verfahren.

Der Begriff Verkehrsmittel umfasst Lastwagen, bspw. Zugmaschinen mit Auflieger oder Zugmaschinen mit separaten Anhänger, u.a. Fahrzeuge mit Anhänger oder Auflieger, die zur Aufnahme einer Wechselbrücke geeignet sind.

Aus der DE 296 08 492 U1 ist eine Wechselbrücke zum Aufsetzen auf ein Fahrzeugchassis bekannt. Die Wechselbrücke ist mit Hydraulikstützen versehen und mittels dieser anheb- und absenkbar. Je eine Hydraulikstütze ist einem der Eckbereiche des Tragrahmens der Wechselbrücke zugeordnet und über einen Hydraulikzylinder von einer Ruheposition bei Nichtgebrauch der Stützen in eine Stützposition in Betriebsstellung der Stützen verlagerbar. Die Stützbeine der Wechselbrücke werden vom Tragrahmen der Wechselbrücke horizontal nach außen verlagert und dann über den Hydraulikzylinder ausgefahren, so dass der Tragrahmen der Wechselbrücke in vertikaler Richtung gegenüber dem Untergrund verlagerbar ist.

Die DE 422 39 51 A1 offenbart einen Klappmechanismus, mit dem die Stützbeine einer Wechselbrücke von der Ruheposition in die Stützposition bewegbar sind. Das Stützbein wird aus der Ruheposition in horizontaler Richtung nach außen bewegt und durch Rotation um die horizontale Achse durch Verschwenken auf dem Untergrund beziehungsweise Boden abgestützt. Die spezielle Zwangsführung der Stützenachse in Verbindung mit einem mechanischen Antrieb ermöglicht die Automatisierung des kompletten Bewegungsablaufs der Stützen. Der sequenzielle Arbeitsvorgang beim Ausfahren der Stützbeine erfolgt folgendermaßen: Entriegeln und seitliches Ausfahren der Stütze in Richtung der im Lagerrohr geführten Stützenachse, Abklappen der Stütze in die senkrechte Absetzstellung, Ausklappen und Verriegeln der Strebe im Wiederlager am Behälterboden, wodurch die Stütze in Behälterlängs- und -querrichtung gesichert ist. Danach wird ein Verriegelungsmechanismus am fahrzeugseitigen Auflagepunkt durch Dreh- und Senkbewegung des Verriegelungszapfens (Twistlock) entriegelt. Die Kraftübertragung vom Fahrzeug auf die Stützbeine der Wechselbrücke erfolgt bei der mechanischen Ausführung durch einen angetriebenen fahrzeugseitigen Mitnehmerzapfen, der in die Behälterunterseite eingreift und entweder die Stützenachse in Behälterquerrichtung oder das Strebenwiderlager in Behälterlängs- und -querrichtung bewegt. Bei der hydraulisch/pneumatischen behälterseitigen Antriebsausführung ist ein Druck-/Zugzylinder mit selbsttätigem Koppelventil vorgesehen, das bei der Aufnahme der Wechselbrücke durch das Fahrzeug den Zylinder mit dem erforderlichen Druck versorgt.

Aus der DE 196 07 945 C2 ist ein Wechselbehälter beziehungsweise eine Wechselbrücke mit Stützbeinen bekannt, wobei jeweils die Stützbeine durch Drehen um 90 Grad um ein Lagerrohr von einer Ruheposition in die Stützposition verlagerbar sind.

Ein Verkehrsmittel oder der zugehörende Anhänger werden unter die abgestützte Wechselbrücke gefahren und über die Luftfederung wird der Fahrzeugrahmen nach oben ausgefahren, um die Wechselbrücke mit den Stützbeinen vom Untergrund abzuheben, so dass die Stützbeine in die Ruheposition verlagerbar sind. Ein pneumatischer Schubzylinder greift in eine Nut am Stützbein ein und verlagert dieses in horizontaler Richtung nach außen. Der Antrieb ist am Fahrzeugrahmen festgelegt und kann beispielsweise aus vier Schubzylindern oder auch aus einem elektrischen Antrieb bestehen, um die Stützbeine in die Stützposition zu verlagern. Eine Ansteuerung zur automatischen Betätigung der Stützbeine der Wechselbrücke ist nicht dargestellt, soweit es sich auf das Verkehrsmittel bezieht.

Die DE 698 09 858 T2 zeigt den mechanischen Aufbau einer Wechselbrücke, jedoch ist hier wenig in Bezug auf das Verkehrsmittel offenbart. Besonders wenig Information liegt dabei zur elektronischen Ausrüstung des Verkehrsmittels vor. Es wird dazu offenbart, einen Zylinder durch ein System von E-lektroventilen zu steuern. Jedes Elektroventil kann durch einen Steuerkasten ferngesteuert werden. Eine darüber hinausgehende Offenbarung zur elektrischen Ausstattung des Verkehrsmittels ist hier nicht vorhanden.

Die DE 195 26 702 C2 befasst sich mit der Aufgabe, einen Lastwagen mit Anhänger rückwärts unter eine Wechselbrücke zu rangieren. Dazu weist der Anhänger eine Kamera auf, die die Stützbeine der Wechselbrücke erfasst, um den Anhänger zwischen die Stützbeine zu fahren. Eine Regeleinrichtung ist dazu in der Zugmaschine vorgesehen. Das Aufladen der Wechselbrücke und das Betätigen der Stützbeine spielt dabei keine Rolle.

Es ist Aufgabe der vorliegenden Erfindung, ein Verkehrsmittel oder einen zugehörenden Anhänger für eine Wechselbrücke derart weiterzubilden, dass eine Betätigung einer genormten Standardwechselbrücke automatisch durchführbar ist und es ist vorgesehen, dabei die Ansteuerung des Antriebs zur Verlagerung der Stützbeine zu verbessern.

Diese Aufgabe wird durch die Merkmale des unabhängigen Anspruchs 1 gelöst. Danach ist am Verkehrsmittel bzw. am Anhänger ein Steuergerät angeordnet, welches ein Steuersignal an ein an dem Verkehrsmittel bzw. Anhänger befestigtes Betätigungselement ausgibt, so dass dieses mit dem Stützbein an der Wechselbrücke zusammenwirkt, um dieses in die Stützposition oder Ruheposition zu verlagern, wobei das Steuergerät mit jeweils einem elektrisch ansteuerbaren Aktor verbunden ist, der Aktor ein elektrisch betätigbares Ventil eines Schuboder Zugzylinders oder ein Elektromotor ist, und dass das Steuergerät mit mindestens einem weiteren Verriegelungsaktor verbunden ist, um die Wechselbrücke während der Fahrt am Verkehrsmittel festzulegen.

Erfindungsgemäß ist erkannt worden, dass durch den Einsatz einer speziellen Elektronikarchitektur, das Umbauen der Wechselbrücke in Stützstellung und das Abladen der Wechselbrücke vom Lastkraftwagen oder dessen Anhänger deutlich verbessert werden kann. Eine Voraussetzung für die allgemeine Anwendbarkeit besteht darin, dass an den genormten Wechselbrücken keine Veränderungen erforderlich sind. Vielmehr betrifft die Erfindung ausschließlich das Verkehrsmittel oder den dazugehörenden Anhänger. Das Verkehrsmittel wird durch die erfindungsgemäße Lösung so verbessert, dass die Wechselbrücke ausgehend von der Fahrzeugkabine oder durch eine Fernbedienung, die drahtlos oder drahtgebunden mit dem Verkehrsmittel elektrisch leitend verbunden ist, auf- oder abgeladen werden kann. Dazu ist im Verkehrsmittel beziehungsweise im Anhänger ein Steuergerät vorgesehen, das über ein Datenbussystem mit weiteren Steuergeräten vernetzt ist. Insbesondere ein Steuergerät im Anhänger ist über einen Datenbus mit den Steuergeräten in der Zugmaschine elektrisch leitend verbunden, um ein Betätigungselement anzusteuern, das die Stützbeine der Wechselbrücke verlagern kann. Das Steuergerät ist derart im Verkehrsmittel oder im Anhänger angeordnet, so dass sternförmig von diesem ausgehend elektrische Leitungen vorhanden sind, die Aktoren mit elektrischem Strom oder Daten versorgen. Die Aktoren, beispielsweise Elektromotoren, dienen als Betätigungselemente zur Verlagerung der Stützbeine oder sind mit einem Betätigungselement zur Verlagerung des Stützbeins verbunden, wie dies beispielsweise bei einem elektrischen Ventil als Aktor und einem pneumatischen Schubzylinder als Betätigungselement der Fall ist.

Die Elektronikarchitektur im Verkehrsmittel stellt zumindest einen Steuersignalempfänger bereit, der entweder von der Fahrerkabine oder über die Fernsteuerung das Signal zum Ausfahren der Stützbeine in die Stützposition oder umgekehrt in die Ruheposition erhält. Der jeweilige Zustand der Stützbeine kann im Fahrerhaus der Zugmaschine angezeigt werden und beispielsweise durch ein Kamerabild ergänzt werden, um das Umfeld der Stützbeine darzustellen. Das Startsignal zum Verlagern der Stützbeine wird beispielsweise über einen CAN-Datenbus zu einem ersten Steuergerät im Zugfahrzeug und von dort über einen Datenbus oder elektrische Leitungen weiter zu den Aktoren übertragen, die die Betätigungselemente zum Verlagern der Stützbeine ansteuern. Über einen zusätzlichen Datenbus kann das Signal auch an einen Anhänger weitergegeben werden, um dort über ein Steuergerät verarbeitet zu werden, und um dort die Aktoren zum Ansteuern des Betätigungselements für jeweils ein Stützbein zu aktivieren.

Bei einer Weiterbildung der Erfindung hat der Fahrer ein Fernbedienungsgerät zur Verfügung, welches er mit sich führt, wenn er neben einem Stützbein steht und das durch Betätigen der Fernbedienung von der Ruheposition in die Stützposition verlagerbar ist. Ebenso kann über die Fernbedienung das Verlagern des Stützbeins in die Ruheposition erfolgen.

Bei einer Weiterbildung der Erfindung ist ein Sensor mit dem Steuergerät elektrisch leitend verbunden, der erfasst, ob die Wechselbrücke am Verkehrsmittel beziehungsweise Anhänger über den Verriegelungsaktor festgelegt ist, oder ob die Stützbeine in der Ruheposition festgelegt sind. Das Steuergerät ist mit einer Anzeige im Fahrerhaus des Verkehrsmittels verbunden, um die jeweilige Position anzuzeigen. Das Verkehrsmittel kann Sensoren und ein zugeordnetes Anzeigegerät aufweisen, welches die Position der Stützbeine und vor Allem die sichere Verriegelung der Stützbeine während der Fahrt des Verkehrsmittels anzuzeigen. Die Anzeige kann aber auch im Gegenteil nur dann erfolgen, wenn die Stützbeine nicht in der Ruheposition fest verrastet sind. Zusätzlich kann eine weitere Anzeige vorgesehen sein, um die Verrastung von Verriegelungsaktoren oder eben einen Fehler bei der Verriegelung darzustellen, wenn das Verkehrsmittel mit der Wechselbrücke den Fahrbetrieb aufnimmt. Auf diese Weise wird ein besonders sicherer und automatisierter Betrieb des Verkehrsmittels mit einer Wechselbrücke gewährleistet.

Bei einer besonders bevorzugten Weiterbildung der Erfindung ist das Betätigungselement derart ausgeführt, dass sowohl ein horizontales Verlagern eines Stützbeines der Wechselbrücke aus der Ruheposition und andererseits auch das Verschwenken dieses Stützbeines von einer horizontalen in eine vertikale Stützposition möglich ist. Zusätzlich kann das Betätigungselement am Verkehrsmittel auch das automatische Rückführen des Stützbeines in die Ruheposition unterstützen. Dazu kann das Betätigungselement ein durch einen Elektromotor angetriebene Welle sein, die an eine weitere Welle im Bereich des Stützbeines an der Wechselbrücke eingreift, so dass durch die Drehbewegung der Welle das Stützbein in die horizontale Position verlagert wird und anschließend durch einen Schub- oder Zugzylinder in der Ruheposition verrastbar ist.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform des erfindungsgemäßen Verkehrsmittels dargestellt. Es zeigen jeweils in schematischer Darstellung,
- Fig. 1: einen Lastwagen mit Anhänger mit jeweils aufgesetzter Wechselbrücke und der zugehörenden Steuergerätearchitektur und
- Fig. 2: eine detailliertere Ansicht der Steuergerätearchitek tur des Verkehrsmittels oder Anhängers.

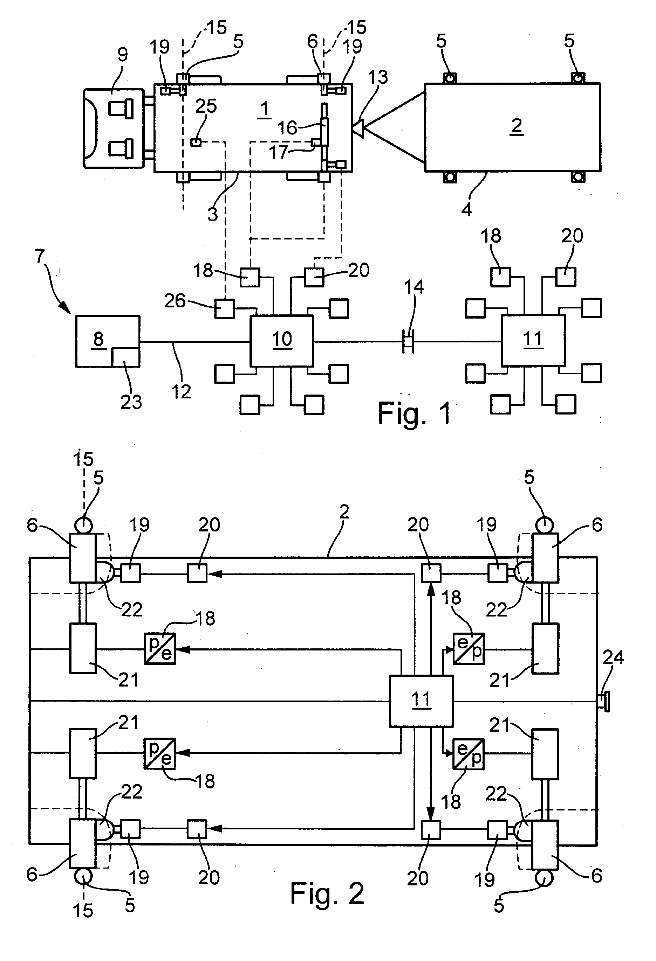

Das Verkehrsmittel besteht aus einer Zugmaschine 1 und dem zugehörenden Anhänger 2, jeweils mit einer aufgesetzten Wechselbrücke 3 und 4. Jede Wechselbrücke 3, 4 weist vier Stützbeine 5 auf, wobei in der Figur 1 die Stützbeine 5 seitlich an der Wechselbrücke 3 in der Ruheposition anliegen und beim Anhänger 2 die Stützbeine 5 in der Stützposition auf dem Untergrund fest aufgesetzt sind. In der Stützposition kann dann die Wechselbrücke 4 auf dem Untergrund abgesetzt werden, indem die Luftfederung des Anhängers diesen durch Ablassen der Druckluft absenkt, so dass die Wechselbrücke 4 auf dem Untergrund zu stehen kommt.

Jedem Stützbein 5 ist eine Stützbeinmechanik 6 zugeordnet, über die das jeweilige Stützbein 5 von der Ruheposition in die Stützposition verfahren werden kann. Die Stützmechanik 6 wird jeweils über ein elektronisches Netzwerk 7 angesteuert, wobei ein zentrales Steuergerät 8 im Führerhaus 9 der Zugmaschine 1 angeordnet ist, während ein weiteres Steuergerät 10 im hinteren Bereich der Zugmaschine 9 und ein Steuergerät 11 im Anhänger 2 angeordnet ist. Die Steuergeräte 8, 10 und 11 sind über einen Datenbus 12 beispielsweise einen CAN-Datenbus, miteinander vernetzt, wobei im Bereich der Anhängerkupplung 13 der Datenbus 12 beispielsweise über einen Steckverbinder 14 oder über eine drahtlose Datenbusverbindung mit dem Steuergerät 8 und dem Steuergerät 10 der Zugmaschine 1 verbunden ist.

In der Ruheposition liegen die Stützbeine 5 seitlich an der Wechselbrücke 3 an. Über die Stützmechanik 6 werden die Stützbeine aus einer gesicherten Ruheposition zunächst horizontal nach außen bewegt und danach durch eine Rotationsbewegung um die Achse 15 in die Stützposition verschwenkt und dort fixiert. Ein pneumatischer oder hydraulischer Schubzylinder 16 bewerkstelligt die horizontale Verlagerung und dessen Steuerventile 17 werden über einen elektrischen Aktor 18 elektromechanisch angesteuert, der wiederum durch das Steuergerät 10 steuerbar ist. An der Rotationsachse 15 ist eine durch Elektromotoren 19 betätigbare Welle angeordnet, um die Stützbeine 5 von der Ruheposition in die Stützposition und umgekehrt zu verschwenken. Auch der Elektromotor 19 wird über einen Aktor 20 durch das Steuergerät 10 angesteuert. Das Netzwerk 7 ist derart ausgestaltet, dass die Stützbeine 5 vollständig automatisiert in die Stützposition und wieder zurück in die Ruheposition verschwenkbar sind. Auf diese Weise wird über die elektronische Steuerungskomponenten die Wechselbrücke 3, 4 vollautomatisch auf den Untergrund abgestellt.

In Figur 2 ist das Netzwerk 7 des Anhängers 2 detaillierter dargestellt. Das Steuergerät 11 ist sternförmig mit den einzelnen Aktuatoren, die jeweils am Anhänger 2 befestigt sind, verbunden. Dort sind neben der Stützmechanik 6 jeweils vier Schubzylinder 21 vorgesehen, um die Stützbeine 5 entsprechend anzusteuern. Die Ventile der Schubzylinder 21 werden jeweils über elektropneumatische Aktoren durch das Steuergerät 11 angesteuert. Die Elektromotoren 19 die über ein Getriebe an der Welle der Stützbeine 5 angreifen, werden über einen Aktor 20 und ein Getriebe 22 durch das Steuergerät 11 angesteuert, um die Stützbeine 5 um die Achse 15 zu verschwenken. Mit dem zentralen Steuergerät 8 ist eine Fernsteuerung 23 verbunden, die einerseits drahtlos von einer Fernbedienung und andererseits aus dem Führerhaus 9 der Zugmaschine 1 und außerdem noch über einen Schalter 24 am Anhänger 2 und an der Zugmaschine 1 betätigbar ist. Auf diese Weise kann der Fahrer mit der Fernbedienung beispielsweise neben dem Anhänger 2 stehen, während er die Stützbeine 5 auf den Untergrund absenkt. Andererseits kann aber auch mit Unterstützung einer Kamera vom Führerhaus 9 aus das Verschwenken der Stützbeine gestartet werden. Über den Bedienknopf 24 kann schließlich noch drahtgebunden die Wechselbrücke angesteuert werden.

Das Steuergerät 10 steuert über einen weiteren elektrischen Aktor 26 den Verriegelungsaktor 25 an, der die Wechselbrücke 3 an der Zugmaschine 1 festliegt, wenn die Zugmaschine 1 auf der Straße fährt. Das Netzwerk 7 ermöglicht somit das Aufnehmen und Absetzen der Wechselbrücke 3, 4 vollautomatisch, so dass der Fahrer lediglich zur Beobachtung mit der Fernbedienung neben dem Verkehrsmittel stehen kann. Ein derartiges vollautomatisches Wechselbrücken-Ladesystem eignet sich besonders bei großen Logistikunternehmen zum vollautomatischen Auf- und Abladen von Gütern.

## Patentansprüche

1. Verkehrsmittel mit zugehörendem Anhänger (2) mit einer Ansteuerung zur Betätigung einer aufladbaren Wechselbrücke (3, 4) mit einem Tragrahmen und daran befestigten Stützbeinen (5), die in eine Ruheposition vom Untergrund abhebbar und in eine Stützposition bewegbar sind, so dass die Wechselbrücke (3, 4) ohne Verkehrsmittel (1) bzw. Anhänger (2) auf dem Untergrund abstellbar ist, wobei mindestens einem Stützbein (5) ein Mittel (6, 16) zugeordnet ist, um das Stützbein (5) automatisiert von der Ruheposition in die Stützposition und/oder umgekehrt zu verfahren, und wobei am Verkehrsmittel (1) beziehungsweise Anhänger (2) ein Steuergerät (8, 10, 11) angeordnet ist, welches ein Steuersignal an ein an dem Verkehrsmittel (1) beziehungsweise dem Anhänger (2) befestigtes Betätigungselement (17, 18, 19, 20) ausgibt, so dass dieses mit dem Stützbein (5) an der Wechselbrücke (3, 4) zusammenwirkt, um dieses in die Stützposition oder Ruheposition zu verlagern, wobei das Steuergerät (8, 10, 11) mit jeweils einem elektrisch ansteuerbaren Aktor (17, 19) verbunden ist, wo der Aktor (17, 19) ein elektrisch betätigbares Ventil (17) eines Schub- oder Zugzylinders (16) oder ein Elektromotor (19) ist, **dadurch gekennzeichnet, dass** eines der Steuergeräte (8, 10, 11) mit mindestens einem weiteren Verriegelungsaktor verbunden ist, um die Wechselbrücke (3, 4) während der Fahrt am Verkehrsmittel festzulegen, dass ein Steuergerät (11) im Anhänger (2) über einen Datenbus (12) mit den Steuergeräten (8, 10) in der Zugmaschine (1) elektrisch leitend verbunden ist, um eines der Betätigungselemente (17, 18, 19, 20) anzusteuern, dass das Steuergerät (8, 10, 11) derart im Verkehrsmittel (1) oder im Anhänger (2) angeordnet ist, so dass sternförmig von diesem ausgehend elektrische Leitungen vorhanden sind, um die Aktoren mit elektrischem Strom oder Daten zu versorgen, und dass über einen Datenbus (12) das Signal von der Zugmaschine (1) an den Anhänger (2) übertragbar ist, um dort über ein Steuergerät (11) verarbeitet zu werden, und um dort die Aktoren zum Ansteuern des Betätigungselements (18, 20) für jeweils ein Stützbein (5) zu aktivieren, und dass ein Sensor mit einem der Steuergerät (8, 10, 11) elektrisch leitend verbunden ist, der erfasst, ob die Wechselbrücke am Verkehrsmittel beziehungsweise Anhänger (2) über den Verriegelungsaktor festgelegt ist, oder ob die Stützbeine (5) in der Ruheposition festgelegt sind, um die Position der Stützbeine (5) und die sichere Verriegelung der Stützbeine (5) während der Fahrt des Verkehrsmittels anzuzeigen oder um anzuzeigen, ob die Stützbeine (5) nicht in der Ruheposition fest verrastet sind.

2. Verkehrsmittel oder Anhänger nach Anspruch 1, **dadurch gekennzeichnet, dass** ein Sensor mit dem Steuergerät (8, 10, 11) elektrisch leitend verbunden ist, der erfasst, ob die Wechselbrücke (3, 4) am Verkehrsmittel (1) bzw. Anhänger (2) über den Verriegelungsaktor festgelegt ist, oder ob die Stützbeine (5) in der Ruheposition festgelegt sind.

3. Verkehrsmittel oder Anhänger nach Anspruch 1 oder 2, **dadurch gekennzeichnet, dass** das Steuergerät (8, 10, 11) mit einer Anzeige im Fahrerhaus des Verkehrsmittels (1) verbunden ist, um dies anzuzeigen.

4. Verkehrsmittel oder Anhänger nach Anspruch 1, **dadurch gekennzeichnet, dass** das Steuergerät (8, 10, 11) im Verkehrsmittel (1) bzw. Anhänger (2) mit einem Empfänger für ein Betätigungssignal von einer Fernbedienung (23) in Verbindung steht, um die Verlagerung der Stützbeine (5) einzuleiten.

5. Verkehrsmittel oder Anhänger nach Anspruch 1 oder 4, **dadurch gekennzeichnet, dass** im Anhänger (2) ein Steuergerät (8, 10, 11) angeordnet ist, welches über einen Datenbus mit einem Zugfahrzeug vernetzt ist, um die Betätigungselemente (17, 18, 19, 20) aufgrund eines im Führerhaus oder einer Fernbedienung eingegebenen Signals anzusteuern.

6. Verkehrsmittel oder Anhänger nach Anspruch 1, **dadurch gekennzeichnet, dass** das Betätigungselement (17, 18, 19, 20) am Verkehrsmittel (1) oder Anhänger (2) befestigt ist und eine horizontale Verlagerung eines Stützbeins (5) der Wechselbrücke (3, 4) aus dessen Ruheposition bewirkt.

7. Verkehrsmittel oder Anhänger nach Anspruch 1, **dadurch gekennzeichnet, dass** ein Betätigungselement (17, 18, 19, 20) das automatische Rückführen des Stützbeins (5) in die Ruheposition unterstützt.
